# EUROPEAN PATENT SPECIFICATION

(11) **EP 1 517 111 B1**
(45) Date of publication and mention of the grant of the patent: **27.07.2011**
(21) Application number: 04255559.9
(22) Date of filing: 09.11.1999
(51) Int. Cl.: F41H 5/04

(54) **Method and apparatus for defeating high-velocity projectiles**
Methode und Vorrichtung zur Unschädlichmachung von Hochgeschwindigkeitsprojektilen
Procédé et dispositif permettant de mettre en échec des projectiles animés d'une grande vitesse

(30) Priority: 09.11.1998 US 189105; 30.04.1999 US 302734
(43) Date of publication of application: 23.03.2005
(62) Divisional of application: 99970856.3
(73) Proprietor: Pinnacle Armor, LLC., Fresno, California 93755 (US)
(72) Inventor: Neal, Murray L., Fresno California 93727 (US); Bain, Allan D., Oceanside California 92056 (US)
(74) Representative: Gilmour, David Cedric Franklyn

(56) References cited:
- WO-A-88/06413
- WO-A-91/06823
- US-A- 3 563 836
- US-A- 3 867 239
- US-A- 5 196 252
- US-A- 5 515 541

## Description

### BACKGROUND OF THE INVENTION

### (1) Field of the Invention

The invention relates to protective wear. More specifically, the invention relates to flexible body armor designed to defeat high-velocity projectiles.

### (2) Background

Advances in body armor are frequently related to development of improved materials from which the armor is formed. In recent years, ballistic resistant materials formed from high tensile strength fibers, such as aramid fibers or polyethylene fibers, have gone into common use in the field. Unfortunately, soft body armor, even with these advanced materials, has proven insufficient to thwart even armor-piercing pistol ammunition, sharp thrusting implements, and circular penetrators, all of which are now in common use.

To address this problem, various hard metal plating systems have been developed. One such system employs a number of titanium discs one inch in diameter and 0.813 mm - 1.27 mm (.032-.050 inches) in thickness laid out in overlapping rows such that in the interior of a row, a disk overlaps its predecessor in the row and is overlapped by its successor in the row. Subsequent rows overlap their predecessor and are overlapped by their successor. The coin layout is then attached to a substrate such as adhesive impregnated aramid fabric. A second layer of adhesive impregnated aramid may be used to envelope the "plate" formed by the coins. This enveloped plate can be attached to conventional soft body armor over vital organs. It provides good flexibility and is thin enough to conceal.

Similarly, U.S. Patent Nos. 3,563,836 and 5,196,252 disclose projectile resistant armor comprising a plurality of non-milled plates affixed to the surface of a flexible substrate. The plates are adjacently affixed to the flexible substrate in non-overlapping manner in any one layer, The plate layered substrates may then be layered one on top of the other to create an overlapping plate configuration. Additional substrate layers are used to encase the plate layers and create a projectile resistant armor.

While this overlapping of the coins and plates has been shown to spread the force effectively to defeat most existing armor-piercing pistol rounds, sharp thrusting implements, and circular penetrators, unfortunately, rifle rounds continue to tear through this plating structure, as well as the underlying soft body armor like a hot knife through butter. Thus, for protection from rifle rounds, users have been required to employ large rigid plates to shield the vital organs. These large plates are heavy and inflexible, and generally uncomfortable to use. Additionally, they are next to impossible to use in a concealed manner. Efforts to employ the coin design with thicker disks have failed to yield a commercially viable product to defeat rifle rounds. Thicker disks result in less flexibility and do not lay out well. The result is a plating structure thicker, no more flexible, and heavier than the solid plates discussed above. Wearer comfort is also a premium concern in body armor production. Accordingly, these limitations make such a structure impractical as a commercial product.

In view of the foregoing, it would be desirable to have a flexible armoring system that would defeat high-velocity projectiles, such as rifle rounds.

### BRIEF SUMMARY OF THE INVENTION

An apparatus for defeating high-velocity projectiles is disclosed in claim 1 and a method of making such is disclosed in claim 15. Preferably plurality of disks of equal size and having a thickness greater than 2.54 mm (.100") are milled in a plurality of places. Each milled place having a radius of curvature approximately equal to the radius of curvature of the disk. The disks are then laid out in an imbricated pattern row by row such that each disk in a row is in substantially a straight line with the other disks in the row and overlaps a milled place of a disk in a row above its row and has its milled place overlapped by a disk in the row below its row. The imbricated pattern is then adhered to a flexible, high tensile strength substrate and overlaid by a second high tensile strength layer such that the imbricated pattern is enveloped between the substrate and the second layer. The envelope is then coupled to a soft body armor backing.

In an alternative embodiment, a method and apparatus for defeating high-velocity projectiles is disclosed. A plurality of disks of equal size comprised of fiber induced ceramic composites are provided. The disks are laid out in an imbricated pattern row by row such that each disk in a row is in substantially a straight line with the other disks in the row and overlaps a segment of a disk in an adjacent row. The imbricated pattern is then adhered to a flexible, high tensile strength substrate and overlaid by a second high tensile strength layer such that the imbricated pattern is enveloped between the substrate and the second layer. The envelope is then coupled to a soft body armor backing.

### BRIEF DESCRIPTION OF THE DRAWINGS

**Figure 1** is a cutaway schematic of a suit of body armor of one embodiment of the instant invention.
**Figure 2** is a perspective diagram of the layout of disks in one embodiment of the invention.
**Figure 3** is a diagram of an imbricated pattern adhered to a substrate.
**Figure 4** is a diagram of enveloping the imbricated pattern between a substrate and an additional layer.
**Figure 5** is a perspective view of a disk of an alternative embodiment of the invention.
**Figure 6** is a sectional view of the disk of the embodiment of Figure 5.
**Figure 7** is a perspective view of a disk of a second alternative embodiment of the invention.
**Figure 8** is a cross-sectional view of the disk of the embodiment of Figure 7.
**Figure 9** is a frontal view of one embodiment of body armor.
**Figure 10** is a cutaway view of one embodiment of the body armor.
**Figure 11** is a side cutaway cross-sectional view of one embodiment of the body armor.
**Figure 12** is a perspective view of one disk embodiment.
**Figure 13** is a perspective view of the disk embodiment of Figure 4 with an epoxy modified resin and Eglass coating.
**Figure 14** is a sectional view of the disk embodiment of Figure 5 illustrating the coatings.
**Figure 15** is a perspective view of one disk embodiment.
**Figure 16** is a sectional view of one disk embodiment.

### DETAILED DESCRIPTION OF THE INVENTION

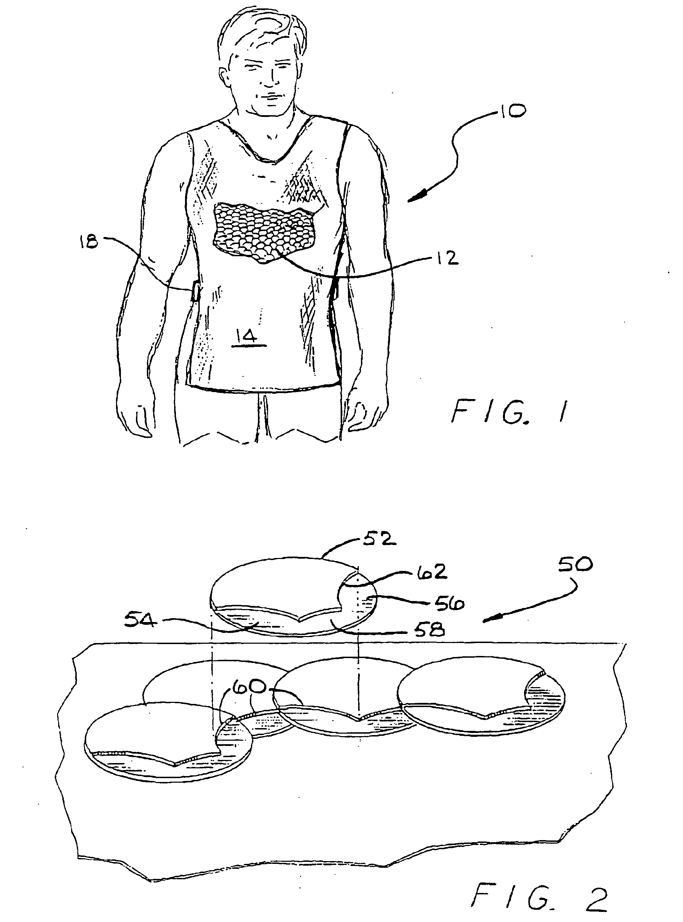

**Figure 1** is a cutaway schematic of a suit of body armor of one embodiment of the instant invention. The body armor 10 covers a user's torso and is designed to protect the vital areas from high-velocity projectiles. Through appropriately laying out disks in an imbricated pattern, the overall body armor 10 remains flexible and also provides good protection against high velocity projectiles. Unlike the 10 x 12 rigid plates of the prior art, the imbricated pattern can flex around body contours and is therefore considerably more comfortable and also more readily concealable. The imbricated pattern 12 is typically sandwiched between two layers of fabric 14 made of high tensile strength fibers, such as aramid fibers or polyethylene fibers. The fabric 14 should be tear and cut resistant and is preferrably ballistic grade material designed to reduce fragmentation. This fabric 14 can be adhesive impregnated, thus, the adhesive on the fabric adheres to the disks that compose the imbricated pattern 12 and retains their relative position. One or more additional layers of the fabric 14 may be added to the sandwich. This will be discussed further below.

Underlying the imbricated pattern 12 that is sandwiched between two or more layers of tear and cut resistant fabric layers 14 is conventional soft body armor 16. A high-velocity projectile is deemed defeated even if it penetrates the plating of the imbricated pattern and all fabric layers if it does not penetrate the underlying soft body armor or cause backside deformation of greater than 44 mm (1.73"), as backside deformation is defined by the National Institute of Justice (NIJ). Attachment straps, such as strap 18, couple a front panel of the body armor 10 to a back panel of the body armor 10 in a standard manner. Attachment strap 18 could be any conventional strapping common in the industry.

**Figure 2** is a perspective diagram of the layout of disks in one embodiment of the invention. In this case, the disks are laid out from left to right. Each subsequent row is also laid out left to right. It has been found that switching from left to right, then to right to left, creates weakness in the resulting pattern that often causes failure. Figure 2 shows only part of two rows of the ultimate imbricated pattern. Disks within each row form a substantially straight line. Because the disks overlap, each disk has a slight slope relative a line normal to the layout surface. Additionally, each disk is rotated slightly such that a line through the center of a row in conjunction with an axis bisecting the milled arc of the central milled place is not at a right angle. In one embodiment, this angle is approximately 60°. A typical disk 52 is shown raised above its eventual placement in the pattern 50. Disk 52 is typically of a high hardness material, having a hardness of greater than 450 Brinell. Many suitable materials exist, including high carbon steel, stainless steel, steel alloys, and various titanium alloys. A preferred material is marketed under the trademark Mars 300™, and is available from Creusot-Loure Industries, a division of Creusot Marrel of France. Mars 300™ typically has a hardness of 630-650 Brinell. Another suitable material is sold under the trademark BP 633™ by Astralloy of Birmingham, Alabama. Most suitable materials are sold in sheets. Mars 300™ is purchased in sheets having a thickness of approximately 0.4267 mm (.168"). The individual disks must be cut from the sheets. This can be accomplished by plasma cutting, laser cutting, or water jet cutting, depending on the material used. "Cutting" as used herein (when unmodified) refers generically to any technique by which a disk is produced.

In one embodiment, disk 52 is laser-cut using a conventional laser technology to ensure a uniform diameter and smooth edge as between multiple disks. Water jet cutting could be used but is not believed to be as good as laser cutting. Plasma cutting would also be possible but would then require additional deburring and smoothing steps to achieve the same edge smoothness. After cutting each disk 52 is milled, disk 52 is milled in three places-a left milled place 54, a central milled place 58, and a right milled place 56. This milling can be performed in any order.

In one embodiment, each milled place is milled in multiple passes. For example, the left milled place 54 is taken down to approximately half the eventual mill depth. The same half depth milling is then performed on the right milled place 56 followed by the central milled place 58. Then a second pass is performed to bring the mill depth down to approximately its final depth. A final high speed polishing pass is then performed to ensure a smooth finish for each of the milled places.

Typically, disk 52 has a radius between 12.7 mm (1/2") and 50.8 mm (2"). Longer radii reduce flexibility but also manufacturing cost. In a currently preferred embodiment, a 25.4 mm (1") radius is employed. Depending on the material, disks having thicknesses between 2.032 mm (.080") and 4.750 mm (.187") may be used. The radius of curvature of each milled place is approximately identical to the radius of the disk 52. Thus, if disk 52 has a one-inch radius, each milled place, left milled place 54, central milled place 58, and right milled place 56 also has a 25.4 mm (1") radius of curvature. The depth of the milling is typically 1.010-2.032 mm (.040"-.080") for disks between 2.45 mm (.100") and 4.750 mm (.187") in thickness.

Each milled place has a "mill distance." Mill distance is defined as used herein to be the perpendicular distance between the edge of disk 52 and the apex of the milled place 54, 56, 58. In one embodiment, the right and left milled places 54, 56 have the same mill distance which on a 25.4 mm (1") radius disk is .540". The central milled place has a mill distance of .50 on a 25.4 mm (1") radius disk. It is important that when laid out in the imbricated pattern, three disks so laid define an arc 60 into which an additional disk may be placed. Notably, a disk seated in arc 60 may only abut the milled edge 62 of the disks whose right and left milled place it overlays. This will depend on the depth of the milling. In one embodiment, the milled edge 62 has a slight slope as opposed to being exactly perpendicular to the milled surface. This reduces cracking of the disk during a ballistic event and reduces wear on the milling equipment.

While in one embodiment, all disks are identical to disk 52, this leads to a number of milled places along ending edges (e.g., the right edge and the bottom if a left to right layout is used or conversely, the left edge and bottom if a right to left layout is used). The pieces fit together neatly and there is no significant gap between overlapping disks. The overlap of the shown pattern has been found to effectively spread the force of a high-velocity projectile hit to adjacent disks, thereby preventing penetration and backside deformation. The edges on which disks have milled places not overlapped by another disk are deemed outside the "zone of protection" provided by the armor.

Additionally, because of the slight tilt of each disk in the pattern, a perpendicular hit is very unlikely and some of the energy will be absorbed in deflection. Finally, during the ballistic event, the hardness of the disk material tends to expand or blunt the tip of the projectile, causing a further reduction in its piercing ability. Notably, the layout can be made in any shape so that the zone of protection conforms to the torso or other vital area.

In an alternative embodiment, special finishing disks may be used with fewer milled places to ensure that all milled places are overlapped by a full thickness disk. For example, a bottom row of disks may be milled only to allow overlap of an adjacent disk in the bottom row, e.g., only having a right milled place (for a left to right layout), and since no other disk will overlap the disks in the bottom row, this will avoid thin spots in the bottom row.

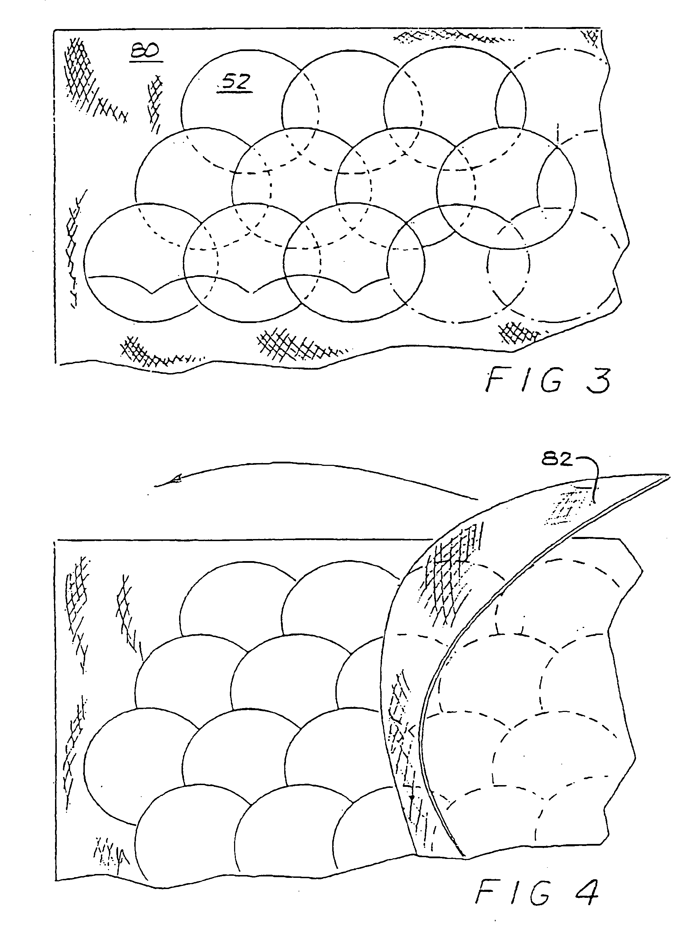

**Figure 3** shows an imbricated pattern of disks 52 coupled to a substrate 80. As previously discussed, substrate 80 could be an adhesive impregnated polyethylene or aramid fiber fabric. Suitable fabrics include the fabric sold under the trademark SPECTRA® by AlliedSignal of Morristown, New Jersey, TWARON® microfiliment by Akzo-Nobel of Blacklawn, Georgia, SB31 and SB2, sold under the trademark DYNEEMA, by DSM of Holland, PBO sold under the trademark ZYLON® by Toyobo of Tokyo, Japan, KEVLAR® or PROTERA® by E.I. Dupont de Nemours & Company of Chattanooga, Tennessee. Other suitable fabrics will occur to one of ordinary skill in the art.

Some suitable substrates are available with an aggressive adhesive coating covered by a release paper. In addition to being aggressive, it is important that the adhesive once cured remains flexible to reduce separation of the disks and substrate during a ballistic event. The substrate of a desired size may be cut and the release paper peeled back to expose the adhesive surface. The disk can then be laid out directly onto the adhesive which retains them in position relative to one another. Because the substrate is flexible and the disks flex about their intersection, the combined unit is flexible. Alternatively, the pattern may be laid out and the substrate adhered over the top.

As shown in Figure 4, the next step is to place another layer of this adhesive coated flexible substrate on the other side of the hand laid coins to secure them in a flexible position that does not change when the panel is flexed, such that although each coin will pivot off the adjacent coins, the actual position of each coin remains substantially in the same place it was laid. This second layer of adhesive fabric used to envelop the imbricated pattern provides further staying power, thereby reducing the risk that a disk will shift and the body armor will fail.

The NIJ defines various levels of threat. A level three threat is a full metal jacket 7.62 x 51 millimeter 150 grain round traveling at 2700-2800 feet/second. It has been found that the above-disclosed invention will defeat level three and all lesser threats. Additional layers of the adhesive coated flexible substrate material may be added to either side in any proportion (i.e. it is within the scope and contemplation of the invention to have more substrate layers on one side of the plate than the other side of the plate) in multiple layers to achieve different performance criteria. Some situations benefit from allowing the coins to move slightly during the ballistic event, while others make it desirable that the coin remain as secure in place as possible.

In an alternative embodiment of the invention, a "dry" high tensile strength flexible substrate is provided. It is then coated with a flexible bonding agent, for example, a silicon elastomer resin. The disks may then be laid out as described above. The bonding agent is then cured to flexibly retain the relative locations of the disks. A similarly coated layer can be used to sandwich the plate from the opposite side. It is also within the scope and contemplation of the invention to use one layer with a flexible bonding agent while a facing layer is of the peel and stick variety described above. As used herein, "adhesive impregnated substrate" refers to suitable flexible high tensile strength material having an adhesive disposed on one side, whether commercially available with adhesive in place or coated later as described above.

In yet another embodiment, an adhesive impregnated substrate is created by either above described method and the (sandwiching) layer is non-adhesive and merely coupled to the underlying substrate about the periphery of the plate. This will somewhat degrade the retension of the disk as compared to sandwiching between adhesive layers. Accordingly, this configuration will not survive as many hits and the front layer attached about the periphery serves primarily as a spall shield.

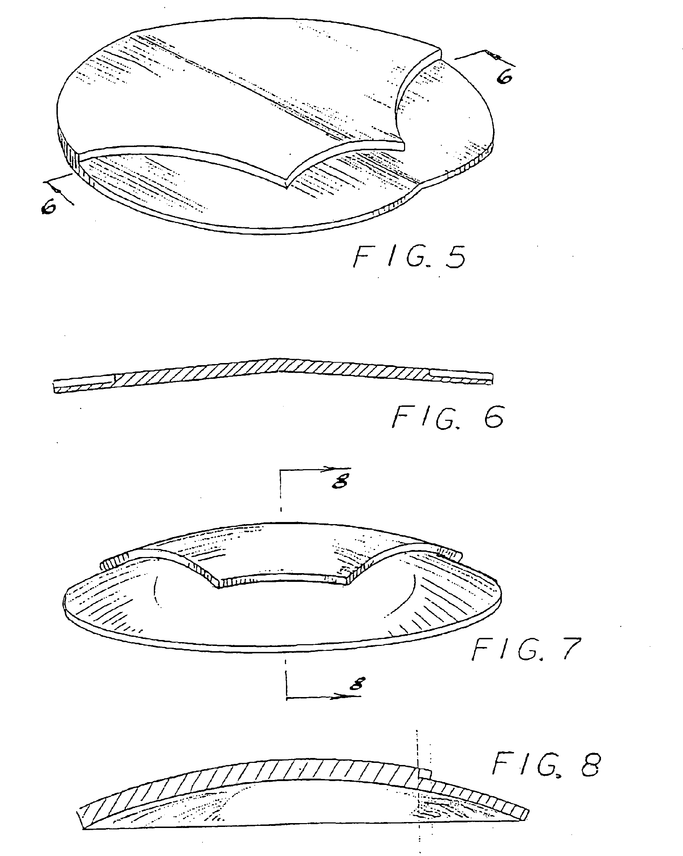

**Figure 5** is a perspective view of a disk of a second alternative embodiment of the invention. In this embodiment, a flat disk is prepared in the normal manner and then curved slightly about an axis bisecting the arc of the central milled place. The bend will typically range from 2° to 15° off the horizontal, depending on the dimensions and curvature of the area to be protected by the armor. This embodiment is most suitable where large disks, e.g., having a radius of 50.8 mm (2"), are used as the slight curve, allowing the disks to better match the contours of the body. This is desirable with large disks because the larger disks imply reduced flexibility of the overall assembly. Therefore, from a comfort standpoint, it is desirable to have a disk curved to accommodate body contour and motion. For disks of a radius 1" or less, such bending is deemed unnecessary and undesirable. **Figure 6** is a cross-sectional view of the disk of the embodiment of Figure 5.

**Figure 7** is a perspective view of a disk of an alternative embodiment of the invention. In this embodiment, the disk is prepared as described above. After milling but prior to layout, a press is used to concave the disk from the backside which causes the disk to be convex in the direction of the milled surface. **Figure 8** is a sectional view of the disk of the embodiment of Figure 7. In this view, the concavity is clearly evident. This disk design may have improved deflection characteristics over the flat disk and also may improve comfort for some wearers.

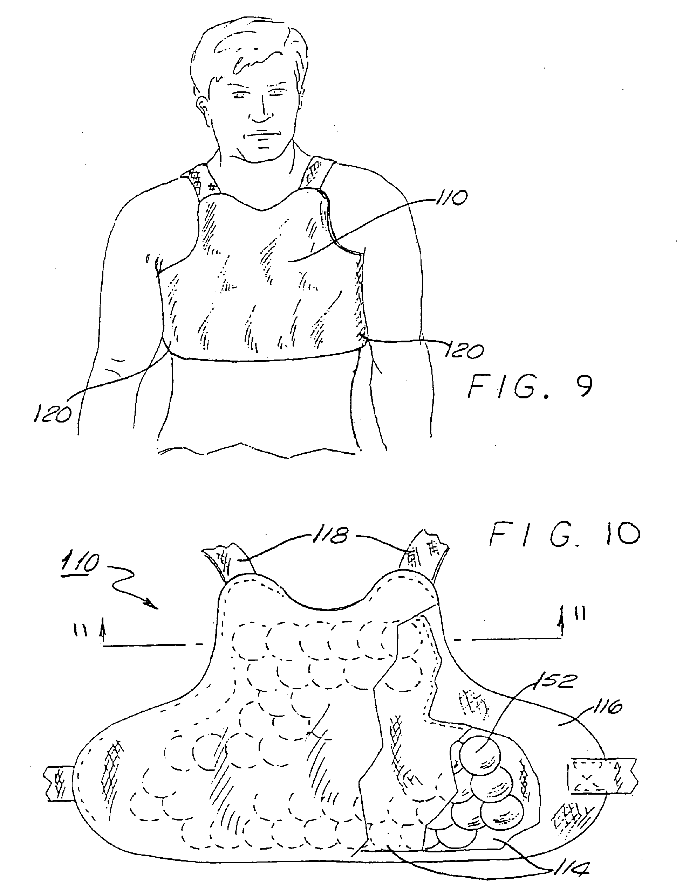

**Figure 9** is a frontal view of a suit of body armor as worn in one embodiment of the instant invention. The body armor 110 covers a user's torso and is designed to protect the vital areas from high-velocity projectiles. Flaps 120 on the body armor extend around the wearer's body to extend protection to the wearer's sides. In one embodiment the body armor wraps around a segment of the wearer, for instance the torso, providing substantially uniform armor protection in a enveloping circumference.

**Figure 10** is a cutaway frontal view of one embodiment of a suit of body armor. Disks 152 are arrayed in an imbricated pattern to cover vital areas where the body armor is worn. Unlike the 10 x 12 rigid plates of the prior art, the imbricated pattern can flex around body contours and is therefore considerably more comfortable and also more readily concealable. Each disk 152 is formed of a high hardness material. In one embodiment, each disk is discus shaped having a maximum thickness in the center of the disk and declining in thickness towards the outer edge by providing one or more downwardly inclined surface segments. In one embodiment, the thickness of the discus shaped disk declines in a uniform downward inclined slope from the center towards the outer edge. In another embodiment the discus shape has an internal circumference within which the disk is uniformly thick and slopes uniformly downward between the internal circumference and the circumferential edge of the disk.

Typically, the edge thickness will be approximately one-half the thickness in the center. As such, when laid out in the imbricated pattern the disks exhibit a pivot capability which allows on the order of 60% greater flexibility than metal plates or existing coin arrangements. Many such suitable ceramic materials exist which are also of relatively lighter weight when compared to steel or other high hardness metals.

The tapering design intrinsic to the discus shape of one embodiment of the invention renders the disk surface non-planar, providing a slope to deflect ballistic impacts as compared with a uniform flat planar surface. In this regard, the ceramic composite material can be sintered and/or molded into a homogenous ballistic grade discus shape more easily and less expensively than can a metal disk, which must either be lathed or tooled to produce a similar tapering discus form. However, discus shaped metal disks are within the scope and contemplation of the invention. Through appropriately laying out disks in an imbricated pattern, the overall body armor 110 remains flexible and also provides good protection against high velocity projectiles.

Additionally, the lighter weight and greater flexibility of the ceramic composite as compared to prior art protection from high velocity projectiles, allows for greater mobility and range of motion by the wearer. For instance, body armor vests composed of imbricated ceramic disks of ballistic grade hardness and fracture toughness may wrap entirely around a segment of the wearer, for instance the torso, extending disk protection up to 360 degrees about the wearer. The lighter ceramic material also avoids pronounced negative buoyancy of high hardness metal coins or plates typical of prior art body armor. This provides for climbing or swimming uses in the field for which prior art body armor is not suitable.

In this embodiment also, to arrange the imbricated pattern, the disks are laid out from left to right. Each subsequent row is also laid out left to right. It has been found that switching from left to right, then to right to left, creates weakness in the resulting pattern that often causes failure. Disks within each row form a substantially straight horizontal line. Because the disks overlap, each disk lies on a slight tilting slope relative to a line normal to the horizontal layout surface. In one embodiment, this slight slope of the disks complements their inclined discus shape to increase the probability of impact deflection.

After the disks are laid out from left to right and top to bottom and sandwiched between a pair of adhesive layers, the entire pattern is inverted for assembly into body armor. It has been found that the majority of threats arrive at a downward trajectory. Thus it is desirable that each row of disks overlap the row below it as the armor is worn. It is, however, within the scope and contemplation of the invention to lay out the disks in an alternative order, e.g. right to left, bottom to top. It is also contemplated that inverting the imbricated pattern in the course of assembling the body armor may be connected such that each row overlaps the row above it.

A number of possible ceramic composites have been found suitable as high hardness materials for the disks. These include fiber induced ceramics sold under the trademarks SINTOX® FA and DERANOX® by Morgan Matroc, Ltd. of Bedforshire, England. In particular, SINTOX® FA alumina oxide ceramic and DURANOX® D995L, for a zirconia toughened alumina oxide ceramic composite, composed of approximately 88% by weight alumina plus approximately 12% by weight transformation toughened zirconia (TTZ), have proven suitable ceramic composites.

While alumina based composites are preferred, other bases may be utilized to form the ceramic composite including barium titanate, strotium titanate, calcium zirconate, magnesium zirconate, silicon carbides and boron carbides. As indicated, these potential ceramic bases are not limited to oxide ceramics but also include mixed oxides, non-oxides, silicates as well as MICATHERM® ceramics, (the latter being a trademark for inorganic thermoplastic materials sold by Morgan Matroc, Ltd. of Bedforshire, England).

Suitable ceramic composites would have relatively high hardness and fracture toughness. Typically, such materials would have at least approximately 12 GPa in hardness and at least 3.5 MPa m^{1/2} in fracture toughness in order for the armor to withstand a level three ballistic event as defined by the National Institute of Justice (NIJ). A level three threat is a full metal jacket 7.62x51 mm 150 grain round traveling at 2700-2800 ft./sec. Ultimately, hardness and fracture toughness levels will depend on the type of ceramic composite employed. For exemplary embodiments of the present invention using alumina bases, the fracture toughness minimum for alumina would be 3.8 MPa m^{1/2} and 4.5 MPa m^{1/2} for zirconia toughened alumina. The hardness for alumina would be in the approximate range of 12 to 15 GPa, and for zirconia toughened alumina, the hardness would be at least approximately 15 GPa.

In certain instances, the ceramics employed may be supplemented by the addition of a toughening agent such as toughened metallic oxides. In one embodiment, TTZ is added to the alumina base. The inclusion of metallic oxides increase the strength of the resulting ceramic composite and resist disassociation of the disk upon impact during a ballistic event. For alumina based ceramic composites, the range of TTZ percentage by weight for suitable ballistic grade ceramics would be between 0.05% and 20%. In one embodiment the percentage of TTZ by weight to the alumina base is approximately 12% of the composite.

The ceramics are mixed in ways commonly known in the art. Sintering and molding, including injection molding, methods to form the disk are well known in the art. In one embodiment, the disks may be formed by injection molding and then pressing to the desired shape. Once formed, certain embodiments of the disks are then encompassed with a containment wrap material. This material provides greater integrity to the disk and increases its fracture toughness, consequently enhancing its ability to absorb the impact of ballistic projectiles without disassociation. In one embodiment, this wrap is a glass fiber wrap adhered by an adhesive substrate. Suitable glass fiber materials include Eglass and S-2 Glass available from Owens Corning Fiberglas Technology, Inc. of Summit, Illinois. Suitable adhesives include modified epoxy resins. The containment wrap and epoxy resin substrate can be applied to the disk by autoclaving, or in other ways known to the art. Strength, cohesion and structural integrity may also be imparted by overlaying the disk surface with aramid fibers, layered or cross-laid on an adhesive substrate.

Typically, disk 152 has a radius between 12.7 mm (1/2") and 25.4 mm (1".) Longer radii reduce flexibility but also manufacturing cost. In a current embodiment, a 25.4 mm (1") radius is employed. Each disk tapers in thickness varying between its center region (where the thickness is at its maximum) and its edge (where the thickness is at a minimum). Maximum and minimum thicknesses will vary according to the level of ballistic threat to be defeated. For instance, to defeat a high velocity rifle ballistic threat, a maximum thickness of 9.53 mm (3/8") in the center tapering to 7.81 mm (3/20") minimum thickness at the edge may be used. A low velocity rifle threat (or a high velocity pistol threat) may only require a thickness of between 3.18 mm (1/8") (maximum) and 2.54 mm (1/10") (minimum). In one embodiment, the discus shaped disks have a center thickness of approximately 6.36 mm (1/4") and an edge thickness of 3.18 mm (1/8").

The overlap of the imbricated placement pattern has been found to effectively spread the force of a high-velocity projectile hit to adjacent disks, thereby preventing penetration and backside deformation. Additionally, because of the slight tilt of each overlapping disk in the imbricated pattern, a perpendicular hit is very unlikely and some of the energy will be absorbed in deflection. In the discus embodiment, the tapering of thickness, forming a non-planar inclined surface renders a perpendicular strike extraordinarily unlikely.

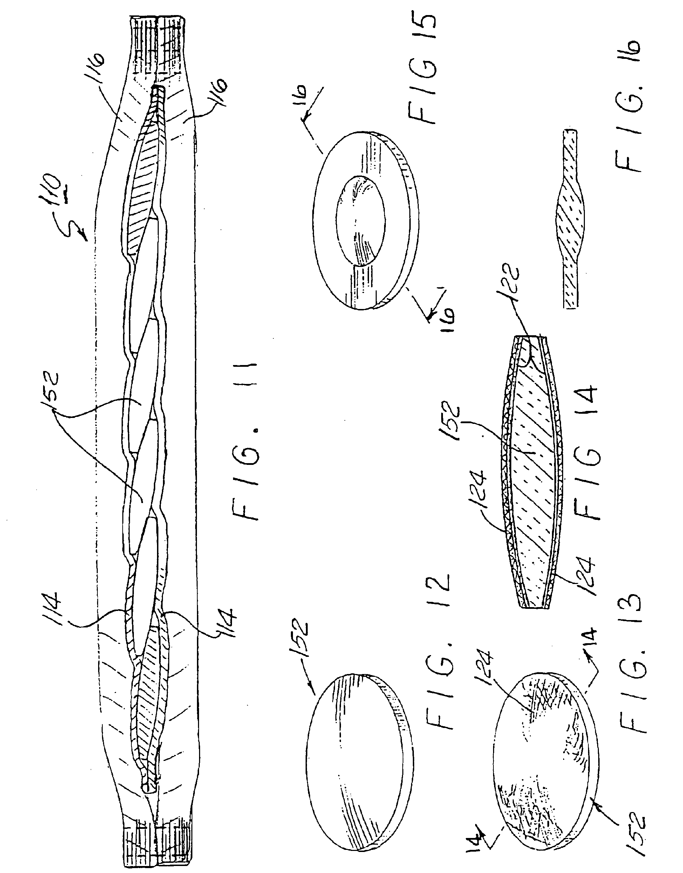

**Figure 11** shows an imbricated pattern of disks 152 coupled to a substrate. As previously discussed, substrate could be an adhesive impregnated polyethylene or aramid fiber fabric. The same fabrics discussed above are suitable for use with the ceramic discs. Layout on the adhesive substrates is also analogous.

**Figure 12** is a perspective view of a disk. In this embodiment, the disk has a discus shape of varying thickness, 6.36 mm (1/4") in the center tapering with a uniform slope to 3.18 mm (1/8") at the circumferential edge. In an imbricated pattern, edges of adjacent disks will overlap, creating areas of significant thickness having multiple disk layers. Ordinarily, this pattern will not overlap the center, or thickest region, of the disk. Thus, a projectile striking the disk pattern at any point will impact either a singular disk near its thickest region, or multiple layered disks at least as thick, and likely thicker, than the thickest region of the singular disk. Moreover, the slope of the discus shape between areas of varying thickness discourage any perpendicular ballistic impact.

**Figure 13** shows a perspective view of a disk after application of a containment wrap. As noted above, this wrap may be a fiberglass or aramid fiber composite adhered to a substrate which may be a modified epoxy resin. The wrap imparts greater fracture toughness and hardness, reducing disk shatter and disassociation in response to a ballistic event.

**Figure 14** shows a cross section of a disk illustrating its discus shape. The layers of adhesive 122 and containment wrap 124, as noted above, are evident.

**Figure 15** is a perspective view of a disk of an alternative embodiment of the invention. In this embodiment, formation of the disk is substantially as described above, varying only in the slope of the end result. While varying in thickness from the center to the edge, the slope of tapering is not uniform, leaving a more pronounced bulging center having a domed shape. This leaves the surface area extending from the circumference edge to the domed center substantially planar. This embodiment allows for the disks to have a greater overlapped surface area, increasing the surface area in which a projectile would encounter multiple layers of disk. However, the substantially planar region increases the probability of a perpendicular strike. The domed disks can be laid out in an analogous manner to that described above and assembled into body armor capable of defeating level three threats.

**Figure 16** is a side view of the alternative embodiment shown in Figure 15.

## Claims

1. An apparatus for defeating a high-velocty projectile comprising :
a plurality of discus shaped disks (52, 152), each disk having a radius, a first inclined surface co-extensive with a segment of the radius and a thickness, the plurality of disks (52, 152) arranged in an imbricated pattern (12); and **characterised by**
a tear and cut resistant substrate (14) retaining the disks (52) in an imbricated pattern (12) such that adjacent disks in a single layer overlap, wherein the apparatus can withstand a NIJ level three ballistic event.

2. The apparatus of Claim 1, wherein each disk of the plurality comprises a ceramic material.

3. The apparatus of Claim 1 or 2, wherein the first inclined surface has a substantially uniform downward slope from a center of each disk of the plurality coextensive with a portion of the radius.

4. The apparatus of Claim 1, 2 or 3, wherein each disk of the plurality includes a fiber induced composite ceramic material comprising alumina and having a hardness of at least 12 Gpa, and a fracture toughness of at least 3.8 MPa - m^{1/2}.

5. The apparatus of any of Claims 1 to 4, wherein each, disk of the plurality further comprises a fiber induced ceramic comprising an alumina and toughened metallic oxide composite.

6. The apparatus of Claim 5, wherein the toughened metallic oxide is transformation toughened zirconia.

7. The apparatus of Claim 6, wherein the transformation toughened zirconia is approximately 12%,by weight, of each disk of the plurality.

8. The apparatus of any of Claims 1 to 7, wherein each disk of the plurality further comprises a containment wrap coupled to the first inclined surface.

9. The apparatus of Claim 8, wherein the containment wrap comprises:
an adhesive substrate coat; and,
glass fiber material overlaying the adhesive substrate.

10. The apparatus of Claim 8, wherein the containment wrap comprises:
an adhesive substrate coat; and,
aramid fiber overlaying the adhesive substrate.

11. The apparatus of any of Claims 1 to 10 wherein the imbricated pattern comprises a plurality of substantially linear horizontal rows of disks, with the disks in a row overlapping adjacent disk of the row.

12. The apparatus of any of Claims 1 to 11 further comprising:
a soft body armor backing coupled to the substrate.

13. The apparatus of Claim 12, wherein the apparatus extends around a wearer such that the imbricated disk pattern protects the wearer in more than a 180 degree arc.

14. A method for making body armor to defeat a high-velocity projectile, the method comprising:
providing a plurality of ceramic disks (52, 152) having an inclined surface;
laying out the plurality of disks in an imbricated pattern (12) on a layout surface; and **characterised by**
adhering a high tensile strength substrate to a first side of the imbricated pattern (12) such that adjacent disks in a single layer overlap.

15. The method of Claim 14, wherein laying out comprises:
placing a subset of the plurality of disks in a substantially straight horizontal row originating from a first horizontal direction; and,
placing successive overlapping substantially straight horizontal rows originating from the firs direction.

16. The method of claim 14 or 15, wherein the imbricated pattern comprises:
overlapping each disk upon a successive disk so that each disk tilts from a horizontal plane defined by the layout surface.

17. The method of any of Claims 14 to 16, further comprising:
encompassing a surface of the disks with a containment wrap.

18. The method of any of claims 14 to 17, further comprising:
adhering a glass fiber overlay to a surface of the disks.

19. The method of any of Claims 14 to 17, further comprising:
adhering an aramid fiber overlay to the surface of the disks.

## Patentansprüche

1. Vorrichtung zum Unschädlich machen eines Hochgeschwindigkeitsprojektils mit:
einer Vielzahl von diskusförmigen Scheiben (52, 152), wobei jede Scheibe einen Radius, eine erste geneigte Oberfläche, die mit einem Segment des Radius übereinstimmt, und eine Dicke aufweist, wobei die Vielzahl von Scheiben (52, 152) in einem Dachziegelmuster (12) angeordnet sind, und **gekennzeichnet durch**
ein reiß- und schneidfestes Trägermaterial (14), das die Scheiben (52) in einem Dachziegelmuster (12) hält, so dass benachbarte Scheiben in einer einzelnen Schicht überlappen, wobei die Vorrichtung einem ballistischen Ereignis der NIJ-Stufe drei standhalten kann.

2. Vorrichtung nach Anspruch 1, wobei jede Scheibe der Vielzahl ein Keramikmaterial umfasst.

3. Vorrichtung nach Anspruch 1 oder 2, wobei die erste geneigte Oberfläche eine im Wesentlichen gleichmäßige Abwärtsneigung von einer Mitte jeder Scheibe der Vielzahl, die mit einem Teil des Radius übereinstimmt, aufweist.

4. Vorrichtung nach Anspruch 1, 2 oder 3, wobei jede Scheibe der Vielzahl ein faserinduziertes Verbundkeramikmaterial mit Aluminiumoxid und mit einer Härte von mindestens 12 Gpa und einer Bruchzähigkeit von mindestens 3,8 MPa ˙ m^{1/2} umfasst.

5. Vorrichtung nach einem der Ansprüche 1 bis 4, wobei jede Scheibe der Vielzahl ferner eine faserinduzierte Keramik mit einem Aluminiumoxid und einem zäh gemachten Metalloxidverbundstoff umfasst.

6. Vorrichtung nach Anspruch 5, wobei das zäh gemachte Metalloxid durch Umwandlung zäh gemachtes Zirkondioxid ist.

7. Vorrichtung nach Anspruch 6, wobei das durch Umwandlung zäh gemachte Zirkondioxid ungefähr 12 Gewichts-% jeder Scheibe der Vielzahl ist.

8. Vorrichtung nach einem der Ansprüche 1 bis 7, wobei jede Scheibe der Vielzahl ferner eine Einkapselungshülle umfasst, die mit der ersten geneigten Oberfläche gekoppelt ist.

9. Vorrichtung nach Anspruch 8, wobei die Einkapselungshülle umfasst:
einen Klebesubstratüberzug; und
ein Glasfasermaterial, das über dem Klebesubstrat liegt.

10. Vorrichtung nach Anspruch 8, wobei die Einkapselungshülle umfasst:
einen Klebesubstratüberzug; und
eine Aramidfaser, die über dem Klebesubstrat liegt.

11. Vorrichtung nach einem der Ansprüche 1 bis 10, wobei das Dachziegelmuster eine Vielzahl von im Wesentlichen linearen horizontalen Reihen von Scheiben umfasst, wobei die Scheiben in einer Reihe benachbarte Scheiben der Reihe überlappen.

12. Vorrichtung nach einem der Ansprüche 1 bis 11, die ferner umfasst:
eine weiche Panzerwestenunterlage, die mit dem Trägermaterial gekoppelt ist.

13. Vorrichtung nach Anspruch 12, wobei sich die Vorrichtung um einen Träger derart erstreckt, dass das Dachziegelscheibenmuster den Träger in einem Bogen von mehr als 180 Grad schützt.

14. Verfahren zur Herstellung einer Panzerweste, um ein Hochgeschwindigkeitsprojektil unschädlich zu machen, wobei das Verfahren umfasst:
Vorsehen einer Vielzahl von Keramikscheiben (52, 152) mit einer geneigten Oberfläche;
Verlegen der Vielzahl von Scheiben in einem Dachziegelmuster (12) auf einer Verlegungsoberfläche; und **gekennzeichnet durch**
Kleben eines Trägermaterials mit hoher Zugfestigkeit auf eine erste Seite des Dachziegelmusters (12), so dass benachbarte Scheiben in einer einzelnen Schicht überlappen.

15. Verfahren nach Anspruch 14, wobei das Verlegen umfasst:
Anordnen einer Teilmenge der Vielzahl von Scheiben in einer im Wesentlichen geraden horizontalen Reihe, die von einer ersten horizontalen Richtung ausgeht; und
Anordnen von nachfolgenden überlappenden, im Wesentlichen geraden horizontalen Reihen, die von der ersten Richtung ausgehen.

16. Verfahren nach Anspruch 14 oder 15, wobei das Dachziegelmuster umfasst:
Überlappen jeder Scheibe mit einer nachfolgende Scheibe, so dass sich jede Scheibe von einer horizontalen Ebene neigt, die durch die Verlegungsoberfläche definiert ist.

17. Verfahren nach einem der Ansprüche 14 bis 16, das ferner umfasst:
Umschließen einer Oberfläche der Scheiben mit einer Einkapselungshülle.

18. Verfahren nach einem der Ansprüche 14 bis 17, das ferner umfasst:
Kleben einer Glasfaserdeckschicht an eine Oberfläche der Scheiben.

19. Verfahren nach einem der Ansprüche 14 bis 17, das ferner umfasst:
Kleben einer Aramidfaserdeckschicht an die Oberfläche der Scheiben.

## Revendications

1. Appareil pour tenir en échec un projectile à grande vitesse, comprenant :
une pluralité de disques (52, 152) en forme de discobole, chaque disque ayant un rayon, une première surface inclinée coextensive avec un segment du rayon et une épaisseur, la pluralité de disques (52, 152) étant agencée selon un modèle imbriqué (12) ; et **caractérisé par** :
un substrat résistant aux déchirures et aux découpes (14) retenant le disque (52) dans un modèle imbriqué (12) de sorte que les disques adjacents dans une couche unique se chevauchent, dans lequel l'appareil peut résister à un évènement balistique de niveau trois 3 NIJ.

2. Appareil selon la revendication 1, dans lequel chaque disque de la pluralité comprend un matériau en céramique.

3. Appareil selon la revendication 1 ou 2, dans lequel la première surface inclinée a une inclinaison descendante sensiblement uniforme à partir d'un centre de chaque disque de la pluralité coextensive avec une partie du rayon.

4. Appareil selon la revendication 1, 2 ou 3, dans lequel chaque disque de la pluralité comprend un matériau en céramique composite induite par des fibres comprenant de l'alumine et ayant une dureté d'au moins 12 Gpa, et une résistance à la fracture d'au moins 3,8 MPa-m^{½}_{.}

5. Appareil selon l'une quelconque des revendications 1 à 4, dans lequel chaque disque de la pluralité comprend en outre une céramique induite par des fibres comprenant une alumine et un composite d'oxyde métallique trempé.

6. Appareil selon la revendication 5, dans lequel l'oxyde métallique trempé est la transformation de la zircone trempée.

7. Appareil selon la revendication 6, dans lequel la zircone trempée de transformation représente environ 12 %, en poids, de chaque disque de la pluralité.

8. Appareil selon l'une quelconque des revendications 1 à 7, dans lequel chaque disque de la pluralité comprend en outre une enveloppe de confinement couplée à la première surface inclinée.

9. Appareil selon la revendication 8, dans lequel l'enveloppe de confinement comprend :
un revêtement de substrat adhésif ; et
un matériau en fibres de verre recouvrant le substrat adhésif.

10. Appareil selon la revendication 8, dans lequel l'enveloppe de confinement comprend :
un revêtement de substrat adhésif ; et
des fibres d'aramide recouvrant le substrat adhésif.

11. Appareil selon l'une quelconque des revendications 1 à 10, dans lequel le modèle imbriqué comprend une pluralité de rangées horizontales sensiblement linéaires de disques, avec les disques dans une rangée qui chevauchent les disques adjacents de la rangée.

12. Appareil selon l'une quelconque des revendications 1 à 11, comprenant en outre :
un renforcement d'armure de corps souple couplé au substrat.

13. Appareil selon la revendication 12, dans lequel l'appareil s'étend autour d'un utilisateur de sorte que le modèle de disque imbriqué protège l'utilisateur sur un arc de plus de 180 degrés.

14. Procédé pour fabriquer une armure de corps pour tenir en échec un projectile à grande vitesse, le procédé comprenant les étapes suivantes :
prévoir une pluralité de disques en céramique (52, 152) ayant une surface inclinée ;
disposer la pluralité de disques selon un modèle imbriqué (12) sur une surface de disposition ; et **caractérisé par** l'étape consistant à :
fixer un substrat très résistant à la traction sur un premier côté du modèle imbriqué (12) de sorte que les disques adjacents dans une seule couche se chevauchent.

15. Procédé selon la revendication 14, dans lequel l'étape de disposition comprend les étapes suivantes :
placer un sous-ensemble de la pluralité de disques dans une rangée horizontale sensiblement droite provenant d'une première direction horizontale ; et
placer des rangées horizontales successives sensiblement droites qui se chevauchent provenant de la première direction.

16. Procédé selon la revendication 14 ou 15, dans lequel le modèle imbriqué comprend : faire chevaucher chaque disque sur un disque successif de sorte que chaque disque s'incline à partir d'un plan horizontal défini par la surface de disposition.

17. Procédé selon l'une quelconque des revendications 14 à 16, comprenant en outre l'étape suivante :
enfermer une surface des disques avec une enveloppe de confinement.

18. Procédé selon l'une quelconque des revendications 14 à 17, comprenant en outre l'étape suivante :
coller un revêtement en fibres de verre sur une surface des disques.

19. Procédé selon l'une quelconque des revendications 14 à 17, comprenant en outre l'étape suivantes :
coller un revêtement en fibres d'aramide sur la surface des disques.
